# FASCICULE DE BREVET EUROPEEN

(11) **EP 0 917 429 B1**
(45) Date de publication et mention de la délivrance du brevet: **13.11.2002**
(21) Numéro de dépôt: 97931867.2
(22) Date de dépôt: 04.07.1997
(51) Int. Cl.: A23B 5/005

(54) **PROCEDE DE TRAITEMENT DE BLANC D'OEUF LIQUIDE**
VERFAHREN ZUR BEREITUNG VON FLÜSSIGEIWEISS
METHOD FOR TREATING LIQUID EGG-WHITES

(30) Priorité: 04.07.1996 FR 9608356
(43) Date de publication de la demande: 26.05.1999
(73) Titulaire: Liot, Roger, F-94000 Créteil (FR)
(72) Inventeur: LIOT, Roger, F-86450 Pleumartin (FR); ANZA, Laurence, F-75020 Paris (FR)
(74) Mandataire: Casalonga, Axel
(86) Numéro de dépôt international: FR9701200
(87) Numéro de publication internationale: WO98001038

(56) Documents cités:
- EP-A- 0 373 026
- DE-A- 4 413 500
- DE-A- 4 421 533
- DE-U- 9 409 959
- FR-A- 2 492 226
- US-A- 5 455 054

## Description

La présente invention a pour objet un procédé de traitement de produits d'oeuf frais comportant, après cassage des oeufs frais et séparation des constituants, un traitement thermique du blanc d'oeuf liquide et l'emballage dans des récipients étanches à l'air.

Le blanc d'oeuf liquide dont il est question dans la présente invention est un blanc d'oeuf frais ou cru, à l'état liquide, obtenu après séparation du blanc et du jaune par cassage mécanique d'oeufs frais. Il s'agit donc d'un produit liquide non fermenté dont le pH normal est de l'ordre de 9 et qui ne comporte aucun additif de conservation.

On a depuis longtemps imaginé des procédés permettant de conserver pendant la période la plus longue possible des produits d'oeuf et en particulier du blanc d'oeuf.

C'est ainsi qu'on a cherché à pasteuriser les produits d'oeuf afin d'éliminer les microorganismes pathogènes, en particulier les salmonelles. La pasteurisation par la chaleur présente cependant des risques considérables si l'on veut éviter une dégradation du produit. En ce qui concerne le blanc d'oeuf en particulier on sait qu'il coagule à partir de 57°C. Par ailleurs lorsque le blanc d'oeuf est chauffé au-dessus de 56,7°C on constate une dénaturation importante et en particulier une diminution de son pouvoir foisonnant ou moussant. Cette dénaturation peut en particulier être mise en évidence en constatant le volume de mousse produit ou la stabilité de meringues réalisées à partir d'un tel blanc d'oeuf traité. Une diminution du pouvoir moussant a même pu être constatée lors de l'élévation de température à 49°C pendant 1 heure ou 43°C pendant 6 heures (CUNNINGHAM dans Egg Science and Technology 1977 page 166). COTTERILL et GLAUERT ont montré dès 1973 (Egg Science and Technology 1977) ces destructions thermiques que l'on pouvait observer pour différents types de produits d'oeuf et notamment pour du blanc d'oeuf liquide lorsque la température est élevée jusqu'à 50°C. Ils ont constaté que lorsque la température augmente, le temps nécessaire pour obtenir une destruction totale des microorganismes diminue et inversement. Aucune mesure n'a été cependant effectuée pour des températures inférieures à 50°C.

En pratique, il a été préconisé pour la pasteurisation du blanc d'oeuf liquide, d'utiliser des températures voisines de 55° à 56°C. Toutefois à cette température on observe une altération non négligeable du pouvoir foisonnant (l'Aviculture Française 1988 page 790).

Pour l'exécution des traitements thermiques en vue de la pasteurisation, on utilise généralement des échangeurs à plaques de façon à maintenir la température de pasteurisation pendant une durée très courte. L'utilisation de tels échangeurs à plaques permet un chauffage très rapide avec un temps de séjour très faible. Il a été constaté qu'en chauffage flash il était possible de traiter du blanc d'oeuf liquide jusqu'à 59°C ou même en montant jusqu'à 62°C sans augmentation de la turbidité (Egg Science and Technology 1977 page 166).

De tels procédés de pasteurisation à haute température et pendant une très faible durée sont connus sous l'appellation HTST (High Temperature Short Time).

Pour éviter les risques de dégradation des produits par la chaleur, d'autres procédés ont été imaginés associant la chaleur à un autre élément. C'est ainsi qu'on a imaginé d'abaisser le pH à 7 par adjonction d'acide lactique et de sulfate d'alumine puis de procéder à une pasteurisation à 60° - 61,7°C pendant 3 à 4 minutes.

Une autre méthode préconisée a été d'adjoindre du peroxyde d'hydrogène qui joue le rôle d'agent bactéricide. Après chauffage du blanc d'oeuf à 51,7° - 53,3°C pendant 1 mn 30, on ajoute le peroxyde d'hydrogène qui est laissé en contact avec le blanc d'oeuf pendant 2 minutes.

Malgré l'utilisation commerciale de ces procédés, il existe un besoin pour un procédé de traitements qui ne ferait pas usage d'additif chimique pouvant entraîner divers inconvénients dont le risque de voir subsister dans le produit final un résidu d'additif. De plus ces procédés risquent d'entraîner la modification non désirée des propriétés naturelles de l'oeuf.

Le brevet américain 2 377 644 (PARSONS) décrit un procédé de traitement de blanc d'oeuf permettant d'obtenir un produit concentré qui peut ensuite être reconstitué de façon à se rapprocher d'un blanc d'oeuf liquide naturel. Selon le procédé décrit, le blanc d'oeuf liquide naturel est soumis à une dessiccation à une température inférieure à la température de coagulation de façon à réduire la quantité d'eau contenue dans le produit et à obtenir une concentration en matière sèche comprise entre 25 et 60%. Après cette étape d'évaporation, le produit est maintenu à une température de 7° à 10°C pendant 12 à 14 heures. Le blanc d'oeuf concentré obtenu peut ensuite être stocké sous forme réfrigérée ou congelée.

La demande de brevet français 2 047 412 (PARKSON) prévoit également un procédé de traitement du blanç d'oeuf par concentration de la teneur en matière solide, le chauffage étant fait sous vide partiel à une température de 30° à 35°C.

Une telle pasteurisation sous vide partiel permet de diminuer la température de pasteurisation et la durée de traitement thermique pour l'obtention des mêmes résultats bacétriologiques. Dans la pratique on remarque cependant que ce type de procédé est difficile à mettre en oeuvre car il nécessite une surveillance précise, constante et exacte à la fois du paramètre température et du paramètre pression dans l'ensemble de l'installation.

On a également décrit dans le brevet français 2 367 435 (LIOT), un procédé de traitement de produits d'oeuf liquide notamment de blanc d'oeuf, pouvant se trouver à l'état concentré ou non concentré, consistant à rajouter des quantités appropriées de sucre ou de sel jusqu'à l'obtention d'un poids osmotique d'au moins 20 atmosphères. On élimine ensuite les gaz dissous jusqu'à l'obtention d'une teneur en oxygène inférieure à 3 ppm. L'élimination des gaz dissous s'effectue par barbotage d'un gaz alimentaire inerte, éventuellement sous vide. Le dégazage peut également être effectué par élévation de la température pendant un court laps de temps jusqu'à environ 50° à 60°C, la température étant choisie en fonction du degré de concentration et de la quantité de sucre ou de sel additionné.

Un traitement thermique ultérieur est appliqué au produit après emballage dans un récipient fermé ou sous circulation de gaz neutre à une température de 50° à 65°C pendant un laps de temps de 4 heures à plusieurs jours et on obtient ainsi des produits d'oeuf et en particulier du blanc d'oeuf, dans lequel les protéines ne sont pratiquement pas dénaturées. Le produit obtenu est pratiquement stérilisé, en ce sens qu'il contient moins de 1000 germes de microorganismes par gramme.

Ce type de produit, malgré ses avantages, ne peut être utilisé pour toutes les applications étant donné qu'il contient à titre d'additif de conservation du sucre ou du sel dans des proportions non négligeables. De plus les produits obtenus sont des produits concentrés qu'il est nécessaire de diluer pour reconstituer un produit liquide analogue à un produit naturel.

On constate donc qu'il existe un important besoin pour un produit d'oeuf liquide se rapprochant le plus possible d'un produit naturel, dont les propriétés sont celles d'un produit naturel et qui peut néanmoins se conserver, de préférence à la température ordinaire, pendant une longue durée.

Il a maintenant été découvert d'une manière surprenante qu'il était possible, par une combinaison spécifique d'étapes particulières lors du procédé de traitement du blanc d'oeuf liquide non concentré d'obtenir un tel produit liquide dénué de tout additif de conservation.

L'invention a donc pour objet un procédé de traitement de produits d'oeuf frais comportant un traitement thermique du blanc d'oeuf liquide non concentré qui permette d'obtenir un produit liquide en tout point identique au blanc d'oeuf liquide obtenu immédiatement après cassage d'un oeuf frais.

L'invention a en particulier pour objet un procédé permettant l'obtention d'un blanc d'oeuf liquide non concentré dénué d'additif de conservation et pouvant néanmoins se conserver au moins trois mois dans son emballage à la température ordinaire.

Le procédé de traitement de produits d'oeuf frais selon l'invention permettant de résoudre ces problèmes comporte, après cassage des oeufs frais et séparation des constituants, un traitement thermique du blanc d'oeuf liquide non concentré et l'emballage dans des récipients étanches à l'air.

Le cassage des oeufs est fait à une température qui peut être comprise entre 0° et 18°C. L'élévation de température du blanc d'oeuf liquide pour le traitement thermique est faite lentement sur une période de temps comprise entre au moins 30 et 240 minutes jusqu'à une température comprise entre 40° et 48°C et de préférence entre 42° et 45°C. Après cette phase d'élévation de température, la température est maintenue à ce niveau pendant une durée comprise entre 1 et 5 jours.

Il a été constaté de manière tout à fait surprenante qu'il était ainsi possible d'obtenir un blanc d'oeuf liquide non concentré qui renferme moins de 10 germes aérobies mésophyles par gramme et aucun germe pathogène (en particulier Salmonelles et Staphylocoques) et pouvant se conserver dans son emballage étanche à l'air pendant au moins trois mois à la température ambiante ou à des températures comprises entre 5° et 35°C. De plus, le blanc d'oeuf liquide ainsi obtenu présente des qualités organoleptiques pratiquement identiques à celles d'un oeuf frais qui vient d'être cassé et présentant notamment les mêmes qualités coagulantes et foisonnantes, de sorte qu'on peut dire que le procédé de l'invention permet en quelque sorte d'obtenir un produit "stérilisé" sans l'adjonction d'aucun additif de conservation et en particulier sans adjonction de sucre ou de sel comme c'était le cas dans les procédés antérieurs et sans que le produit ait subi une quelconque concentration par évaporation d'eau comme on le faisait également auparavant dans certains procédés connus.

Pour la mise en oeuvre du procédé de l'invention, on procède de préférence à la manière suivante : après que la température du blanc d'oeuf liquide ait atteint la température comprise entre 40° et 48°C et de préférence entre 42° et 45°C, le blanc d'oeuf liquide est introduit dans les récipients étanches à l'air et le produit ainsi emballé est maintenu dans une étuve à la température comprise entre 40° et 48°C et de préférence entre 42° et 45°C pendant la durée comprise entre 1 et 5 jours qui a été mentionnée précédemment.

Bien qu'il soit difficile de comprendre la raison pour laquelle on obtient ainsi un produit de très haute qualité, on peut penser que l'invention repose sur l'idée de mettre à profit le pouvoir naturel d'auto-défense de l'oeuf. En effet l'oeuf, en tant que cellule vivante possède de nombreux moyens de défense contre les contaminations microbiennes extérieures. Selon l'invention, pour profiter ainsi des caractéristiques naturelles de l'oeuf, il est important de procéder à une lente élévation de la température comme il a été indiqué précédemment puis au maintien de cette température pendant une durée importante. Le procédé de l'invention va donc totalement à l'encontre des méthodes antérieures qui préconisaient d'une manière générale, pour détruire les germes pathogènes, de chauffer le produit liquide à une température élevée assez proche de la température de coagulation mais pendant une durée très courte.

Dans le procédé selon l'invention, il est également possible et on obtient d'excellents résultats de cette manière, de maintenir le blanc d'oeuf liquide à la température comprise entre 40° et 48°C et de préférence entre 42° et 45°C avant l'introduction du produit dans les récipients étanches à l'air et ce pendant une durée comprise entre 1 et 10 heures et de préférence entre 2 et 5 heures.

Il est également possible de séparer les différentes étapes essentielles du procédé, de l'invention en procédant à une étape intermédiaire de refroidissement du blanc d'oeuf liquide. C'est ainsi qu'après que le blanc d'oeuf liquide ait été chauffé lentement comme il a été dit précédemment jusqu'à la température comprise entre 40° et 48°C et de préférence entre 42° et 45°C, on peut refroidir le blanc d'oeuf liquide jusqu'à la température ambiante en maintenant cependant le produit à l'abri de l'air puis introduire le blanc d'oeuf liquide dans les récipients étanches à l'air à la température ambiante. La température est ensuite élevée à nouveau lentement sur une période de temps comprise entre au moins 30 et 240 minutes jusqu'à une température comprise entre 40 et 48°C et de préférence entre 42° et 45°C. Le produit emballé est maintenu à cette température pendant une durée comprise entre 1 et 5 jours.

Une telle variante du procédé de l'invention est cependant généralement réservée à des récipients d'emballage de faible capacité, de l'ordre de 1 à 5 litres. Pour des récipients d'emballage de capacité plus importante, pouvant aller jusqu'à 200, 500 kg ou plus, on préférera, pour des raisons évidentes d'économie d'énergie, ne pas refroidir le produit après que sa température ait été élevée lentement mais au contraire l'introduire dans les récipients d'emballage lorsqu'il présente la température élevée de maintien.

Dans le procédé de l'invention, on notera qu'il est possible pendant l'élévation de température, de soumettre le blanc d'oeuf liquide, avant qu'il ait été introduit dans les récipients étanches à l'air, à une action d'homogénéisation et de stabilisation de la température par mélange lent ou par recyclage en boucle fermée. Cette action doit cependant rester limitée à l'homogénéisation et la stabilisation de la température, une agitation importante s'avérant néfaste pour la qualité du résultat final.

L'élévation de température du blanc d'oeuf liquide pour son traitement thermique peut se faire immédiatement après le cassage des oeufs et la séparation des constituants, après éventuellement filtrage pour éviter toute introduction d'impuretés telles que débris de coquilles d'oeuf. Il est également possible de différer l'application du traitement thermique. Dans ce cas le blanc d'oeuf liquide obtenu après cassage des oeufs frais et séparation des constituants est de préférence refroidi à une température de 3° à 5°C et maintenu à cette température jusqu'au traitement thermique pendant une durée qui ne doit cependant pas excéder quelques jours.

Dans tous les cas, l'élévation de température et le traitement thermique proprement dit est de préférence effectué dans une cuve de grande capacité par exemple de l'ordre de 1000 à 10 000 litres. Cette cuve peut être fermée de façon à éviter tout risque d'introduction de poussières ou de corps étrangers. Elle peut également être ouverte à l'air libre.

Pour assurer une bonne homogénéité de la température lors de la phase de montée en température ainsi que lors de la phase de maintien, le chauffage du blanc d'oeuf liquidé est de préférence effectué par recyclage en boucle fermée à partir de la cuve, en transitant par un échangeur de chaleur situé à l'intérieur de la cuve. L'entraînement du produit liquide dans la boucle de recyclage peut être effectué par tout moyen tel qu'une pompe du type MOUVEX, sans garniture, n'entraînant pas une agitation excessive dans l'écoulement.

Le maintien en température, après que la température requise précédemment mentionnée ait été atteinte, peut être avantageusement effectué dans une cuve tampon supplémentaire comportant également une boucle de recyclage munie d'un échangeur de chaleur extérieur l'entraînement du produit liquide se faisant comme précédemment avec une pompe du même type.

L'introduction du blanc d'oeuf liquide dans les récipients étanches à l'air après la phase d'élévation lente de température et le maintien éventuel de la température pendant la durée indiquée précédemment est fait avantageusement au moyen d'un dispositif de remplissage branché directement sur la boucle de recyclage de la cuve ou sur celle de la cuve tampon lorsqu'elle est prévue. Les récipients étanches à l'air sont alors transportés avec les produits qu'il contiennent, dans une étuve où la température entre 40° et 48°C et de préférence entre 42° et 45°C est maintenue pendant une durée de 1 à 5 jours.

Les récipients utilisés sont bien entendu adaptés à un tel traitement thermique et présentent en outre un revêtement intérieur approprié au contact avec les produits alimentaires. On utilise de préférence des emballages souples se présentant sous la forme de poches dont il est facile après remplissage de chasser la majeure partie de l'air qui s'y trouve avant de procéder à la fermeture hermétique de la poche par exemple par scellement de ses parois ou par fermeture étanche au moyen d'un bouchon obturateur.

D'une manière générale le matériau choisi pour l'emballage doit être convenablement imperméable à l'air. Il doit de plus de préférence être souple ce qui facilite comme on l'a dit l'élimination de la majeure partie de l'air avant fermeture de l'emballage. Enfin le matériau doit pouvoir résister à la température d'étuvage pendant la durée de 1 à 5 jours et de préférence de l'ordre de trois jours, l'emballage étant alors maintenu fermé évitant ainsi toute évaporation de l'eau contenue dans le produit d'oeuf liquide.

A titre d'exemple de matériau pouvant être utilisé pour des poches ou sachets d'emballage on peut mentionner les films complexes à base de matière plastique ou de matière composite pouvant inclure une feuille métallique ou métallisée, par exemple à base de téréphtalate de polyéthylène/polyéthylène ou encore téréphtalate de polyéthylène/aluminium/polyéthylène. On peut également dans certains cas utiliser des récipients rigides en métal, en matière synthétique, en verre ou en une combinaison de ces matériaux et comportant une fermeture étanche.

Bien qu'il ait été indiqué qu'en pratique l'introduction du produit liquide dans les récipients d'emballage se fait après que la température ait été élevée lentement dans la cuve au moyen d'une boucle de recyclage extérieure, on peut également envisager de placer le produit d'oeuf liquide dans les emballage étanches immédiatement après cassage des oeufs et séparation des constituants. La lente élévation de température est alors effectuée sur le produit contenu dans les emballages étanches à l'air et dûment fermés. La montée en température peut se faire de la même façon que précédemment mentionné c'est-à-dire jusqu'à une température comprise entre 40° et 48°C de préférence entre 42° et 45°C sur une période de temps comprise entre au moins 30 et 240 minutes. La température peut ensuite être maintenue à ce niveau dans l'étuve pendant une durée comprise entre 1 et 5 jours.

Un tel procédé n'est cependant envisageable que pour des emballages de faible capacité afin que l'élévation de température dans l'étuve permette une élévation de température du produit contenu dans les emballages d'une manière suffisamment homogène et régulière Dans la pratique on ne peut envisager une telle variante du procédé de l'invention que pour des emballages n'exédant guère 1 ou 5 kg.

Dans certains cas et pour améliorer l'aspect et les qualités nutritives du produit d'oeuf liquide, on pourra ajouter au blanc d'oeuf liquide avant la phase d'emballage dans les récipients étanches à l'air, tous constituants appropriés tels que colorants, matières grasses végétale ou minérale, vitamines, épaississants etc. Bien entendu ces constituants ajoutés au produit d'oeuf liquide ne participent en aucune façon à la conservation du produit qui est assurée uniquement par la mise en oeuvre du procédé de l'invention.

L'invention va maintenant être décrite de manière plus précise à partir de l'exemple ci-après qui illustre d'une manière nullement limitative un mode de réalisation du procédé de l'invention.

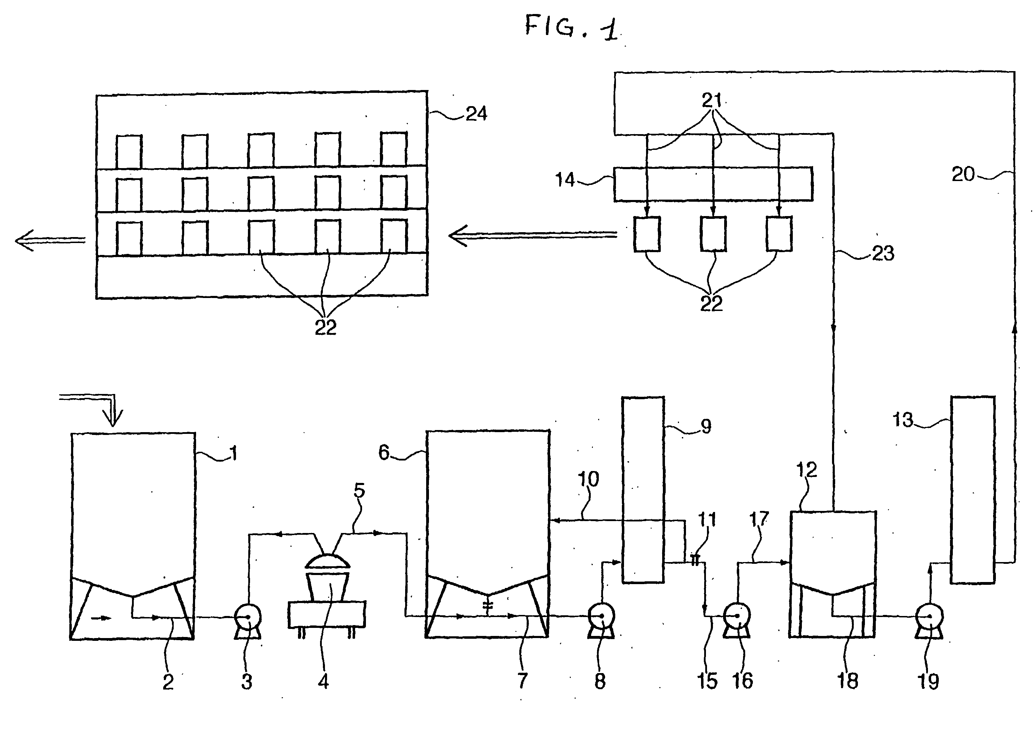

La figure unique illustre un exemple schématique d'installation industrielle permettant la mise en oeuvre du procédé de l'invention. L'installation comprend une cuve 1 pouvant contenir 4000 kg de blanc d'oeuf liquide introduit dans ladite cuve et obtenu à partir d'oeufs frais cassés à la température de 18°C. Le blanc d'oeuf liquide est entreposé dans la cuve 1 après avoir été refroidi à la température de 3°C.

Après environ de 2 heures de stockage à cette température cette masse liquide est extraite de la cuve 1 par la canalisation 2 au moyen d'une pompe 3. Le produit liquide ainsi pompé est débarrassé de ses impuretés dans une centrifugeuse 4 avant d'être introduit par la canalisation 5 dans la partie inférieure d'une cuve de réchauffage 6 pouvant également contenir 4000 kg de produit liquide. Le produit liquide se trouvant dans la cuve 6 est recyclé en permanence au moyen d'une canalisation d'extraction 7 située dans le bas de la cuve 6, le produit liquide étant mis en circulation par la pompe 8, en passant par un échangeur de chaleur extérieur 9 qui permet à la fois la montée en température lente selon le procédé de l'invention et le maintien de la température, le produit liquide étant réinjecté, en sortie de l'échangeur 9, dans la cuve 6 par la canalisation 10. La température du produit liquide se trouvant dans la cuve 6 est ainsi élevée par recyclage continu jusqu'à atteindre une température de 44°C. La durée de la montée en température est de 2 h 30.

Lorsque cette température de 44°C a été atteinte pour la totalité du produit se trouvant dans la cuve 6, ce qui est détecté par un capteur de température non illustré sur la figure, on ouvre la vanne 11 de façon à permettre le passage du produit liquide toujours maintenu à la température de 44°C, dans la boucle de conditionnement comprenant une cuve tampon 12, de capacité inférieure à celle de la cuve 6 et un deuxième échangeur de chaleur extérieur 13 ainsi qu'un dispositif de conditionnement et d'emballage automatique 14. La température du produit liquide est maintenue à 44°C.

Le blanc d'oeuf liquide est pompé par la canalisation 15, au moyen de la pompe 16 qui alimente, par la canalisation 17, la cuve 12. Celle-ci comporte une canalisation d'extraction 18 en partie basse par laquelle le blanc d'oeuf liquide est pompé au moyen de la pompe 19 dans l'échangeur de chaleur 13. Le produit, dont la température est toujours maintenue à 44°C, passe alors par la canalisation 20, dans le dispositif de conditionnement et d'emballage 14 qui comprend plusieurs têtes de remplissage symbolisées par les flèches 21. Le produit liquide est introduit dans des poches souples d'emballage 22 dont les lèvres supérieures sont scellées à chaud après remplissage. Le surplus de produit liquide retourne dans la cuve 12 par la canalisation 23.

Aussitôt emballé à l'abri de l'air dans les poches souples 22 dûment scellées, le blanc d'oeuf liquide est stocké trois jours dans une étuve 24, à l'intérieur de laquelle est maintenue une température de 44°C avec une précision de ± 0,5°C.

Une fois écoulée la durée de trois jours de stockage à 44°C, le blanc d'oeuf liquide toujours contenu dans les emballages étanches 22 peut être laissé à l'air libre en vue de son refroidissement. Le produit obtenu peut être ensuite conservé au moins trois mois à la température ambiante. La température de conservation peut varier de 5° à 35°C sans que l'on puisse détecter des modifications notables dans la qualité du produit.

Les différentes pompes utilisées référencées 3, 8, 16 et 19 sont de préférence des pompes volumétriques de type MOUVEX sans garniture.

Un produit ainsi fabriqué a fait l'objet de tests destinés à mesurer les qualités de foisonnement ainsi que les qualités bactériologiques du produit et pour comparer les résultats obtenus avec un blanc liquide non traité selon l'invention c'est-à-dire obtenu immédiatement après cassage d'oeufs frais.

Le foisonnement du blanc d'oeuf liquide a été effectué à l'aide d'un batteur de marque HOBART N-50 G ayant une capacité de bol de 2,5 *l*. L'appareil a été utilisé avec la vitesse repérée 3 sur l'indice des vitesses. Le temps de battage a été de 90 secondes pour une quantité de 200 g de blanc d'oeuf liquide. Le foisonnement a été mesuré par référence au poids de la mousse dans un godet de 79 ml. D'une manière plus précise, le "foisonnement" est défini comme étant égal à l'inverse du poids de la mousse exprimé en grammes, dans un volume de 79 ml. La tenue de la mousse du blanc d"oeuf battu a été testée en mesurant le volume de liquide tombé au fond d'un récipient de 2000 ml après qu'il ait été rempli avec la mousse obtenue à partir de 200 g de blanc d'oeuf liquide et ce après une durée d'une heure. Les résultats obtenus sont indiqués sur le tableau I.

**TABLEAU I**

| *Produit* | *Traitement* | *Densité de la mousse (en kg*/*l)* | *Foisonnement (en g*⁻¹) | *Tenue de la mousse (liquide mesuré en ml)* |
|---|---|---|---|---|
| Blanc d'oeuf non traité | aucun | 0,103 | 0,123 | 11,5 |
| Blanc d'oeuf selon l'invention | traitement selon l'invention incluant le maintien final à 44°C pendant 4 jours | 0,081 à 0,098 | 0,156 à 0,129 | 7,5 à 13,5 |

Les résultats montrent que le blanc d'oeuf liquide traité selon la présente invention permet d'obtenir d'excellentes qualités de moussé après battage. La densité de la mousse est en effet inférieure à celle obtenue avec un blanc d'oeuf, liquide non traité. De même le foisonnement obtenu comme la tenue dans le temps de la mousse sont supérieurs à ceux présentés par un blanc d'oeuf non traité monté en neige par battage.

Les qualités bactériologiques du blanc d'oeuf liquide et sa bonne tenue en conservation dans le temps ont été mesurées en procédant à une analyse bactériologique classique (germes aérobies totaux, staphylocoques, salmonelles, entérobactéries).

Le blanc d'oeuf liquide traité selon l'invention a été analysé immédiatement après la fin du traitement en ouvrant l'un des récipients, puis après 2 mois de conservation à 25°C, en ouvrant un autre récipient.

A titre de comparaison, un blanc d'oeuf liquide non traité obtenu par cassage d'oeufs frais et maintien 1 heure à +4°C a été analysé ainsi qu'un blanc d'oeuf liquide pasteurisé par traitement classique à 56°C pendant une durée de 6 minutes 30 secondes puis congelé.

Le tableau II montre le résultat de ces essais comparatifs.

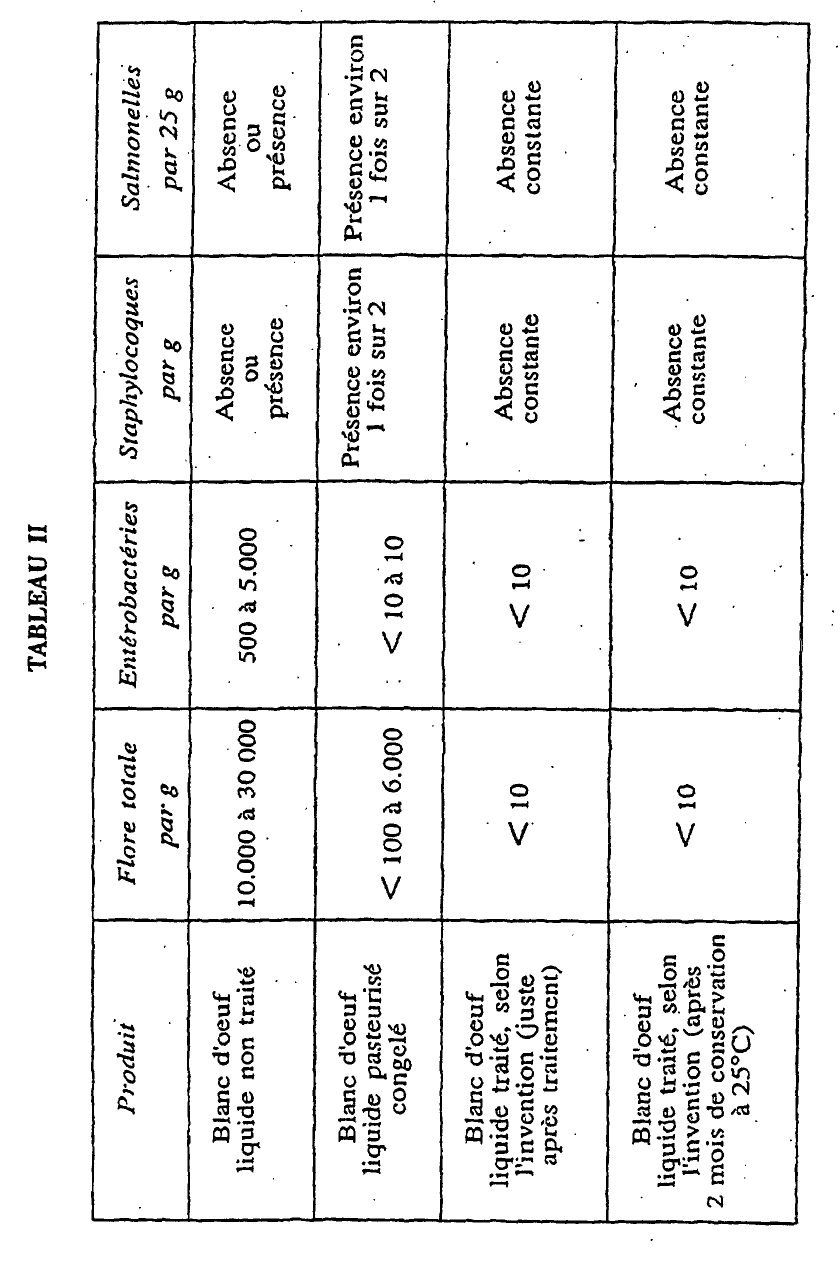

Ces résultats montrent que le traitement selon l'invention permet d'améliorer très nettement les qualités bactériologiques jusqu'à l'obtention d'un produit que l'on peut véritablement qualifier de "stérile" puisque la flore bactérienne n'augmente pas dans le temps même si le produit emballé est conservé à 25°C. On obtient d'ailleurs les mêmes résultats lorsque le produit emballé est conservé à 30° ou à 40°C.

## Revendications

1. Procédé de traitement de produits d'oeuf frais, comportant, après cassage des oeufs frais et séparation des constituants, un traitement thermique du blanc d'oeuf liquide non concentré et l'emballage dans des récipients étanches à l'air, **caractérisé par le fait que** le cassage des oeufs est fait à une température comprise entre 0° et 18°C, l'élévation de température du blanc d'oeuf liquide pour le traitement thermique étant ensuite faite lentement sur une période de temps comprise entre au moins 30 et 240 minutes jusqu'à une température comprise entre 40° et 48°C et de préférence entre 42° et 45°C, puis la température est maintenue à ce niveau pendant une durée comprise entre 1 et 5 jours.

2. Procédé de traitement de produits d'oeuf frais selon la revendication 1 **caractérisé par le fait qu'**après que la température du blanc d'oeuf liquide ait atteint la température comprise entre 40° et 48°C et de préférence entre 42° et 45°C, le blanc d'oeuf liquide est introduit dans les récipients étanches à l'air, le produit ainsi emballé étant maintenu à la température comprise entre 40° et 48°C et de préférence entre 42° et 45°C pendant une durée comprise entre 1 et 5 jours.

3. Procédé de traitement de produits d'oeuf frais selon la revendication 2 **caractérisé par le fait qu'**avant introduction dans les récipients étanches à l'air, le blanc d'oeuf liquide est maintenu à la température comprise entre 40° et 48°C et de préférence entre 42° et 45°C pendant une durée comprise entre 1 et 10 heures et de préférence entre 2 et 5 heures.

4. Procédé de traitement de produits d'oeuf frais selon la revendication 3 **caractérisé par le fait qu'**après l'élévation de température du blanc d'oeuf liquide pour le traitement thermique, jusqu'à une température comprise entre 40° et 48°C et de préférence entre 42° et 45°C, le blanc d'oeuf liquide est refroidi jusqu'à la température ambiante en étant maintenu à l'abri de l'air, puis le blanc d'oeuf liquide est introduit dans les récipients étanches à l'air, la température étant ensuite élevée lentement sur une période de temps comprise entre au moins 30 et 240 minutes jusqu'à une température comprise entre 40° et 48°C et de préférence entre 42° et 45°C, le produit ainsi emballé étant enfin maintenu à la température comprise entre 40° et 48°C et de préférence entre 42° et 45°C pendant une durée comprise entre 1 et 5 jours.

5. Procédé de traitement de produits d'oeuf frais selon l'une quelconque des revendications précédentes **caractérisé par le fait que** pendant l'élévation de température, et avant d'être introduit dans les récipients étanches à l'air, le blanc d'oeuf liquide est soumis à une action d'homogénéisation et de stabilisation de la température par mélange lent ou recyclage en boucle fermée.

6. Procédé de traitement de produits d'oeuf frais selon l'une quelconque des revendications précédentes **caractérisé par le fait qu'**après cassage des oeufs frais et séparation des constituants, le blanc d'oeuf liquide est refroidi à une température de 3° à 5°C et maintenu à cette température avant le traitement thermique.

7. Procédé de traitement de produits d'oeuf frais selon l'une quelconque des revendications précédentes **caractérisé par le fait que** l'élévation de température est faite dans une cuve d'une capacité de 1.000 à 10.000 litres.

8. Procédé de traitement de produits d'oeuf frais selon la revendication 7 **caractérisé par le fait que** le chauffage du blanc d'oeuf liquide dans la cuve est effectué par recyclage en boucle fermée en transitant par un échangeur de chaleur situé à l'extérieur de la cuve.

9. Procédé de traitement de produits d'oeuf frais selon les revendications 3 et 7 **caractérisé par le fait que** le maintien en température est effectué dans une cuve tampon supplémentaire par recyclage en boucle fermée en transitant par un échangeur de chaleur situé à l'extérieur de la cuve tampon.

10. Procédé de traitement de produits d'oeuf frais selon l'une quelconque des revendications 7 à 9 **caractérisé par le fait que** l'introduction du blanc d'oeuf liquide dans les récipients étanches à l'air est faite au moyen d'un dispositif de remplissage branché sur la boucle de recyclage de la cuve ou de la cuve tampon.

11. Procédé de traitement de produits d'oeuf frais selon l'une quelconque des revendications 2 à 10 **caractérisé par le fait qu'**avant emballage dans les récipients étanches à l'air, le blanc d'oeuf liquide est additionné de colorants, de matières grasses végétales ou animales, de vitamines, d'épaississants, ou de tout autre constituant améliorant l"aspect ou les qualités nutritives du produit.

12. Blanc d'oeuf frais liquide non concentré et dénué d'additif de conservation, obtenu selon le procédé de l'une quelconque des revendications précédentes, contenu dans un récipient d'emballage étanche à l'air et renfermant une quantité de germes pathogènes inférieure à 10 germes par gramme.

## Patentansprüche

1. Verfahren zur Behandlung von Frischeiprodukten, umfassend eine thermische Behandlung des flüssigen, nicht konzentrierten Eiweißes nach dem Zerschlagen der frischen Eier und dem Trennen der Bestandteile, und das Verpacken in luftdichten Behältnissen, **dadurch gekennzeichnet, dass** das Zerschlagen der Eier bei einer Temperatur zwischen 0 und 18°C durchgeführt wird, wobei danach langsam eine Erhöhung der Temperatur des flüssigen Eiweißes zur thermischen Behandlung für eine Zeitspanne zwischen mindestens 30 und 240 Minuten auf eine Temperatur zwischen 40 und 48°C, und vorzugsweise zwischen 42 und 45°C, durchgeführt wird, und dann wird die Temperatur für eine Dauer zwischen 1 und 5 Tagen auf diesem Niveau belassen.

2. Verfahren zur Behandlung von Frischeiprodukten gemäß Anspruch 1, **dadurch gekennzeichnet, dass** das Eiweiß in luftdichte Behältnisse eingefüllt wird, nachdem die Temperatur des flüssigen Eiweißes eine Temperatur zwischen 40 und 48°C, vorzugsweise zwischen 42 und 45°C, erreicht hat, wobei das so verpackte Produkt für eine Dauer zwischen 1 und 5 Tagen bei der Temperatur zwischen 40 und 48°C, und vorzugsweise zwischen 42 und 45°C, belassen wird.

3. Verfahren zur Behandlung von Frischeiprodukten gemäß Anspruch 2, **dadurch gekennzeichnet, dass** das flüssige Eiweiß vor dem Einfüllen in die luftdichten Behältnisse für eine Dauer zwischen 1 und 10 Stunden, und vorzugsweise zwischen 2 und 5 Stunden, bei der Temperatur zwischen 40 und 48°C, und vorzugsweise zwischen 42 und 45°C, belassen wird.

4. Verfahren zur Behandlung von Frischeiprodukten gemäß Anspruch 3, **dadurch gekennzeichnet, dass** nach der Erhöhung der Temperatur des flüssigen Eiweißes zur thermischen Behandlung bis zu einer Temperatur zwischen 40 und 48°C, und vorzugsweise zwischen 42 und 45°C, das flüssige Eiweiß bis auf Umgebungstemperatur abgekühlt wird, wobei es luftgeschützt aufbewahrt wird, woraufhin das flüssige Eiweiß in luftdichte Behältnisse eingefüllt wird, worauf die Temperatur danach langsam über einen Zeitraum zwischen mindestens 30 und 240 Minuten auf eine Temperatur zwischen 40 und 48°, und vorzugsweise zwischen 42 und 45°, erhöht wird, wobei das so verpackte Produkt dann bei einer Temperatur zwischen 40 und 48°, und vorzugsweise zwischen 42 und 45°C, für eine Dauer zwischen 1 und 5 Tagen belassen wird.

5. Verfahren zur Behandlung von Frischeiprodukten gemäß irgendeinem der vorangegangenen Ansprüche, **dadurch gekennzeichnet, dass** das flüssige Eiweiß während der Erhöhung der Temperatur und bevor es in die luftdichten Behältnisse eingefüllt worden ist durch langsames Mischen oder Rückschleusen im geschlossenen Kreislauf einer Homogenisierungs- und der Temperaturstabilisierungsmaßnahme unterworfen wird.

6. Verfahren zur Behandlung von Frischeiprodukten gemäß einem der vorangegangenen Ansprüche, **dadurch gekennzeichnet, dass** das flüssige Eiweiß nach dem Zerschlagen der frischen Eier und dem Trennen der Bestandteile auf eine Temperatur von 3 bis 5°C abgekühlt wird und vor der thermischen Behandlung bei dieser Temperatur belassen wird.

7. Verfahren zur Behandlung von Frischeiprodukten gemäß einem der vorangegangenen Ansprüche, **dadurch gekennzeichnet, dass** die Erhöhung der Temperatur in einem Behälter mit einem Fassungsvermögen von 1.000 bis 10.000 Litern durchgeführt wird.

8. Verfahren zur Behandlung von Frischeiprodukten gemäß Anspruch 7, **dadurch gekennzeichnet, dass** das Erhitzen des flüssigen Eiweißes in dem Behälter durch Rückschleusen in geschlossenem Kreislauf durch Durchlaufen eines Wärmeaustauschers, der an der Außenseite des Behälters liegt, durchgeführt wird.

9. Verfahren zur Behandlung von Frischeiprodukten gemäß den Ansprüchen 3 und 7, **dadurch gekennzeichnet, dass** die Aufrechterhaltung der Temperatur in einem zusätzlichen Pufferungsbehälter (cuve tampon) in einem geschlossenen Kreislauf durch Durchlaufen eines Wärmeaustauschers, der an der Außenseite des zusätzlichen Pufferungsbehälters liegt, durchgeführt wird.

10. Verfahren zur Behandlung von Frischeiprodukten gemäß einem der Ansprüche 7 bis 9, **dadurch gekennzeichnet, dass** das Einfüllen des flüssigen Eiweißes in die luftdichten Behältnisse mittels einer am Rückschleusungskreislauf des Behälters oder des Pufferungsbehälters angeschlossenen Vorrichtung zum Einfüllen durchgeführt wird.

11. Verfahren zur Behandlung von Frischeiprodukten gemäß einem der Ansprüche 2 bis 10, **dadurch gekennzeichnet, dass** das flüssige Eiweiß vor dem Verpacken in die luftdichten Behältnisse mit Farbstoffen, pflanzlichen oder tierischen Fetten, Vitaminen, Verdickungsmitteln oder jedem anderen, das Erscheinungsbild oder den Nährwert des Produkts verbessernden Bestandteil versetzt wird.

12. Frisches, flüssiges, nicht konzentriertes Eiweiß, das frei von Konservierungsstoffen ist, das gemäß einem der vorangehenden Ansprüche erhalten wurde und in einem luftdichten Verpackungsbehältnis enthalten ist und eine Menge pathogener Keime unter 10 Keimen je Gramm enthält.

## Claims

1. Process for treating fresh egg products which comprises, after breaking fresh eggs and separating the constituents, a heat treatment of the non-concentrated liquid egg white and packaging in air tight containers, **characterized in that** the eggs are broken at a temperature of between 0° and 18°C, the temperature of the liquid egg white for the heat treatment then being raised slowly over a period of time of between at least 30 and 240 minutes up to a temperature of between 40° and 48°C and preferably between 42° and 45°C, and then the temperature is maintained at this level for a period of between 1 and 5 days.

2. Process for treating fresh egg products according to Claim 1, **characterized in that** after the temperature of the liquid egg white has reached the temperature of between 40° and 48°C and preferably between 42 and 45°C, the liquid egg white is introduced into air tight containers, the product thus packaged being maintained at the temperature of between 40° and 48°C and preferably between 42° and 45°C for a period of between 1 and 5 days.

3. Process for treating fresh egg products according to Claim 2, **characterized in that** before introduction into the airtight containers, the liquid egg white is maintained at the temperature of between 40° and 48°C and preferably between 42 and 45°C for a period of between 1 and 10 hours and preferably between 2 and 5 hours.

4. Process for treating fresh egg products according Claim 3, **characterized in that** after raising the temperature of the liquid egg white for the heat treatment to a temperature of between 40° and 48°C and preferably between 42° and 45°C, the liquid egg white is cooled to room temperature while being maintained protected from air, and then the liquid egg white is introduced into airtight containers, the temperature then being raised slowly over a period of time of between at least 30 and 240 minutes up to a temperature of between 40° and 48°C and preferably between 42° and 45°C, the product thus packaged being finally maintained at the temperature of between 40° and 48°C and preferably between 42° and 45°C for a period of between 1 and 5 days.

5. Process for treating fresh egg products according to any one of the preceding claims, **characterized in that** during the rise in temperature, and before being introduced into the airtight containers, the liquid egg white is subjected to a temperature homogenization and stabilization action by slow mixing or recycling in a closed loop.

6. Process for treating fresh egg products according to any one of the preceding claims, **characterized in that** after breaking the fresh eggs and separating the constituents, the liquid egg white is cooled to a temperature of 3° to 5°C and maintained at this temperature before the heat treatment.

7. Process for treating fresh egg products according to any one of the preceding claims, **characterized in that** the temperature is raised in a tank having a capacity of 1000 to 10,000 litres.

8. Process for treating fresh egg products according to Claim 7, **characterized in that** the heating of the liquid egg white in a tank is carried out by recycling in a closed loop via a heat exchanger situated outside the tank.

9. Process for treating fresh egg products according to Claims 3 and 7, **characterized in that** the temperature is maintained in an additional buffer tank by recycling in a closed loop via a heat exchanger situated outside the buffer tank.

10. Process for treating fresh egg products according to any one of Claims 7 to 9, **characterized in that** the liquid egg white is introduced into the airtight containers by means of a filling device connected to the recycling loop of the tank or of the buffer tank.

11. Process for treating fresh egg products according to any one of Claims 2 to 10, **characterized in that** before packaging in the airtight containers, the liquid egg white is supplemented with colourings, vegetable or animal fat, vitamins, thickeners or any other constituent which improves the appearance or the nutritive qualities of the product.

12. Non-concentrated liquid fresh egg white free of additives for preservation, obtained according to the process of any one of the preceding claims, which is contained in an airtight packaging container and which contains a quantity of pathogenic microbes of less than 10 microbes per gram.
